Europäisches Patentamt

European Patent Office

Office européen des brevets

(19)

(11) Veröffentlichungsnummer: **0 209 817**

**A1**

(12) # EUROPÄISCHE PATENTANMELDUNG

(21) Anmeldenummer: 86109572.7

(22) Anmeldetag: 12.07.86

(51) Int. Cl.⁴: **B 60 T 13/12**
**B 60 T 13/74, B 60 T 8/34**

(30) Priorität: 23.07.85 DE 3526190
27.06.86 DE 3621492

(43) Veröffentlichungstag der Anmeldung:
28.01.87 Patentblatt 87/5

(84) Benannte Vertragsstaaten:
AT DE FR GB IT SE

(71) Anmelder: ROBERT BOSCH GMBH
Postfach 50
D-7000 Stuttgart 1(DE)

(72) Erfinder: Heess, Gerhard, Dr. Dipl.-Ing.
Stuttgarter Strasse 90
D-7146 Tamm(DE)

(72) Erfinder: van Zanten, Anton, Dr. Dipl.-Ing.
Waldstrasse 15/2
D-7257 Ditzingen(DE)

(54) Druckverstärker und -modulator.

(57) Bei einem Bremsdruckverstärker und -modulator (1) für Fahrzeugbremsanlagen wird vorgeschlagen, in einem mittelbar vom Hauptbremszylinder beaufschlagten und mit den Radbremszylindern verbundenen Druckraum (6a) ein verschiebliches Teil anzuordnen, welches Teil eines Permanentmagneten ist, so daß bei zunehmendem oder abnehmendem Bremsdruck vom Hauptbremszylinder gleichzeitig in der einen oder anderen Richtung anwachsend durch magnetische Wirkverbindung mit einem zweiten Magneten (4) eine Poten-tialenergie-Umspeicherung erfolgt, wobei zur Bewirkung von Druckmodulationen bei der Realisierung von ABS-Funktionen vorzugsweise dieser zweite Permanentmagnet gleichzeitig der Einwirkung einer äußeren Erregerspule (11) oder einer Bewegung von außen unterworfen wird, wobei die resultierende Bewegung dieses Permanentmagneten einen Entlastungsdruckraum (6b) öffnet bei gleichzeitiger Schließung des primären Druckraums durch Ventilwirkung.

EP 0 209 817 A1

0209817

R. 20087 IP      SP
1891 IP/ot/mü/wo
9.6.86

ROBERT BOSCH GMBH, 7000 Stuttgart 1

## Druckverstärker und -modulator

## Stand der Technik

Die Erfindung geht aus von einem Druckverstärker und -modulator nach der Gattung des Hauptanspruchs und findet ein bevorzugtes Anwendungsgebiet als Bremsdruckverstärker und gleichzeitig -modulator nach Art eines integrierten Antiblockiersystems zur Durchführung von ABS-Funktionen bei Fahrzeugbremsanlagen. So ist es bei einer hydraulischen Bremsanlage, beispielsweise mit Mehrkreis-Tandem-Hauptbremszylindern, bekannt (DE-OS 27 23 734), der Bremsanlage ABS-Funktionen zuzuordnen, beispielsweise in die Ausgangsbremsdruckleitungen zu den Radbremszylindern elektrisch betätigbare Mehrwege-Magnetventile zu schalten, die die gewünschten und erforderlichen ABS-Steuerfunktionen realisieren. Im Fall einer Druckabsenkung schließen diese Magnetventile die jeweilige Druckleitung vom Hauptbremszylinder zu den angeschlossenen Radbremszylindern und führen gegebenenfalls Druckmittel dem Rückfluß zu. Bei einem gewünschten Druckwiederanstieg wird dann die Verbindung zum Hauptbremszylinder wieder hergestellt, jeweils mit beliebigen Druckzeitverläufen und mit der Möglichkeit, auch Druckhaltefunktionen zu realisieren. Voraussetzung bei solchen Fahrzeugbremsanlagen ist dabei stets das Vorhandensein einer Energiequelle,
die dem Hauptbremszylinder das Bremsfluid unter hohem Druck zur
Verfügung stellt, so daß dieses dann nach Maßgabe der zu erzielenden
Bremswirkung in die Druckleitungen zu den Radbremszylindern eingesteuert werden kann. Erforderlich ist eine solche separate Energiequelle, die üblicherweise eine Pumpe, einen diese antreibenen Elektromotor und entsprechende Druckschalter umfaßt, auch bei der Realisierung von ABS-Funktionen, da bei den bisherigen elektrisch betätigbaren Mehrwege-Magnetventilen unter Druck stehendes Bremsmittel oder Bremsfluid insoweit praktisch "verloren" geht und nachfolgend wieder auf den hohen Druck zurückgepumpt werden muß, der
für den Bremsvorgang erforderlich ist. Ferner ist es erforderlich,
bei der Realisierung von ABS-Funktionen solche Systeme, die eine
Unterbrechung der Bremsleitungen und einen Abfluß des in diesen
befindlichen Druckmittels bewirken, sehr zuverlässig und fehlersicher
auszulegen, damit bei einer Fehlfunktion nicht die Gefahr besteht,
daß zu viel unter hohem Druck stehendes Bremsmittel abgelassen
oder unter Umständen auch gar nicht mehr den Radbremszylindern
zugeführt werden kann.

Im Bereich der Realisierung von ABS-Funktionen ist es ferner bekannt (US-PS 3 690 736; US-PS 3 731 979), einen parallelen Abzweig
in der vom Hauptbremszylinder zu den jeweiligen Radbremszylindern
führenden Leitungen anzubringen und diesen Abzweig mit einem Raum
zu verbinden, der durch ein elektrisch betätigbares Zylinderkolbenaggregat je nach Ansteuerung einer Betätigungsspule gegen den Druck einer Feder veränderlich ist, so daß aus der Bremsleitung Druckvolumen entnommen und wieder zugeführt werden kann - sogenanntes
Plunger-Grundprinzip. In diesem Fall bleibt der Bremskreis zwar
ebenfalls geschlossen; es sind aber Mittel erforderlich, um die
weitere Zufuhr von unter hohem Druck stehendem Bremsdruckfluid
vom Hauptbremszylinder bei ABS-Funktionen zu unterbrechen, damit
die Druckmittelentnahme durch den veränderlichen Raum überhaupt
bis zu den Radbremszylindern wirksam werden kann. Diese Unterbrechung kann auch dadurch ermöglicht werden (US-PS 3 690 736),
daß der zurückweichende Kolben gleichzeitig ein Kugelventil zur Bewirkung eines Verschlusses der Hauptbremszylinderzuleitung freigibt. Versagt das System allerdings an dieser Stelle, dann ist es
nicht mehr möglich, vom Hauptbremszylinder aus, also durch Betätigung des Bremspedals, überhaupt einen Bremsdruck aufzubauen.

Der Erfindung liegt die Aufgabe zugrunde, insbesondere für Fahrzeugbremsanlagen einen Bremsdruckverstärker und gleichzeitig
-modulator zu schaffen, der unter Verzicht auf eine externe Druckversorgung einmal in der Lage ist, an den Radbremszylindern, dem
eingesteuerten Bremsdruck folgend, einen entsprechend überhöhten
oder verstärkten Druck zur Verfügung zu stellen und gleichzeitig so
ausgebildet ist, daß eine Modulation des an den Radbremszylindern
anstehenden Bremsdrucks zur Realisierung von ABS-Funktionen
ohne größeren Aufwand unter Benutzung grundlegender und gleicher
Druckverstärker-Baukomponenten möglich ist.

Vorteile der Erfindung

Diese Aufgabe löst der erfindungsgemäße Druckverstärker und

1891 IP/ot/mü/wo
9.6.86

-modulator, insbesondere für den Bremsdruck bei Fahrzeugbrems-anlagen mit den kennzeichnenden Merkmalen des Hauptanspruchs und hat den Vorteil, daß bei in sich vollkommen geschlossener Bauweise des Bremsdruckverstärkers und -modulators mit lediglich einem Eingang zur Zuführung des vom Hauptbremszylinder herrührenden Bremsdrucks und einem Ausgang zum Anschluß an den oder mehrere Radbremszylinder

1. zur Bremsdruckverstärkung keine externe Energiequelle erforderlich ist, sondern die beim jeweiligen Bremsvorgang erforderliche, den Bremsdruck verstärkende Kraft durch die Umspeicherung von Potentialenergie gewonnen und bei Beendigung des Bremsvorgangs gleichermaßen wieder rückgewonnen wird, also im wesentlichen ohne Energieverlust mit Ausnahme geringer Hystereseverluste;

2. aufgrund des Verzichts auf eine äußere Energiezuführung - mit Ausnahme elektrischer Steuerenergie, die Erregerspulen zugeführt wird,-der Bremsdruckverstärker und -modulator nicht nur kostengünstiger als herkömmliche Bremskraftverstärker ist, sondern

3. auch wesentlich zuverlässiger, da weniger Teile ausfallen können, worauf insbesondere bei einer externen Druckversorgung geachtet werden müßte und deshalb auch

4. wesentlich zuverlässiger und sicherer in der Wirkungsweise ist.

Von besonderem Vorteil bei vorliegender Erfindung ist ferner, daß

der Bremsdruckverstärker und -modulator

5. aus nur wenigen, deshalb problemlos zu montierenden Teilen besteht und

6. eine sehr einfache Bauweise aufweist; darüber hinaus ist

7. der Aufbau des Bremsdruckverstärkers und -modulators robust und

8. wartungsarm sowie

9. auf vergleichsweise kleinem Raum kompakt und daher auch nahe an den Radbremszylindern anzuordnen.

Weitere Vorteile vorliegender Erfindung bestehen darin, daß der Bremsdruckverstärker unter Benutzung wesentlicher Grundbaukomponenten gleichzeitig auch, und zwar durch Zuführung entsprechender elektrischer Ansteuersignalen zu einer Erregerstufe

10. in Form eines sogenannten integrierten Antiblockierschutzsystems im stetigen Übergang und unmittelbar wirkend beliebige ABS-Funktionen realisieren kann, wobei, ausgehend von dieser Fähigkeit

11. durch die Anordnung lediglich einer weiteren zusätzlichen Erregerspule eine einfache Erweiterung auch für Funktionen einer Antriebsschlupfregelung (ASR) möglich ist.

12. Schließlich ist für die Druckmodulation im Bereich der Realisierung von ABS-Funktionen ein nur sehr geringer Energiebedarf erforderlich, wobei

13. keine Rückwirkung der Druckmodulation auf das Brems-
    pedal erfolgt - andererseits eine Information des Fahrers über Anzeigelampen u. dgl. selbstverständlich
    möglich ist und schließlich

14. läßt sich der Bremsdruckverstärker durch einfaches
    Nachschalten weiterer Bremsdruckverstärker durch einfaches Nachschalten weiterer Bremsdruckverstärker
    auf magnetischer Grundlage für die Erzeugung gewünschter Drücke entsprechend ausbauen.

Durch die in den Unteransprüchen aufgeführten Maßnahmen
sind weitere vorteilhafte Weiterbildungen und Verbesserungen des im Hauptanspruch angegebenen Druckverstärkers
und -modulators möglich.

Vorteilhaft ist ferner die Möglichkeit des Aufbaus eines
magnetischen Bremsdruckmodulators ohne jede fühlbare Pedalrückwirkung bei Einsetzen von Druckmodulationen zur Realisierung von ABS-Funktionen, jedoch mit wählbarem Druckverstärkungsfaktor, wobei zur Verschiebung des bei Einsetzen von Druckmodulationen beweglichen Permanentmagneten an diesem ein externer linearer, vorzugsweise elektromagnetischer Steller angreift, der entsprechend elektrische
Signalkombinationen zur Erregung zugeführt erhält. Durch
diese Bewegung bei Einsetzen von ABS-Funktionen ergibt
sich gleichzeitig durch die Absteuerung von im Gehäuse des
Modulators angeordneten Zulauföffnungen über Randkanten
die Unterbrechung der Bremsdruckzuführung sowie bei weiterer Beaufschlagung eine gewünschte Volumenzunahme im
radbremszylinderseitigen Bereich.

Bei einem weiteren Ausführungsbeispiel ist vorteilhaft,
daß        , wenn aus bestimmten Gründen die sogenannte
Druck-Schluckvolumen-Kennlinie der Radbremse eine Änderung erfährt, auch bei dann instabil werdendem Bremskraftverstärker aufgrund einer selbsttätigen Bewegung der vorhandenen Magnete relativ zueinander und einer möglicherweise hierdurch bewirkten Haftung aneinander zwar die
durch die Magnete hervorgerufene Verstärkung des Bremsdrucks ausfällt, die Bremse aber weiterhin betätigt werden kann. Es werden dann beide Magnete zusammen bei einer
einwirkenden Bremsung zur Druckerhöhung im radbremszylinderseitigen Bereich verschoben.

Schließlich ist bei einem dritten Ausführungsbeispiel
vorteilhaft, daß, um eine mögliche Instabilität von vornherein zu vermeiden, die Kennlinie der Magnetkräfte der
Kennlinie der Radbremse angepaßt werden kann.


Zeichnung

Ausführungsbeispiele der Erfindung sind in der Zeichnung
dargestellt und werden in der nachfolgenden Beschreibung
näher erläutert. Es zeigen:
Fig. 1 im Querschnitt und schematischer Darstellung den
       innerhalb eines abgeschlossenen Gehäuses angeord-
       neten, kompakten Aufbau eines Bremsdruckverstär-
       kers und gleichzeitig -modulators und
Fig. 2 ein zweites, erheblich unterschiedliches Ausführungsbeispiel mit von außen an einem der Magnete
       angreifendem linearen Steller, ebenfalls schema-
       tisiert im Querschnitt;

1891 IP/ot/wi
9.6.86                    - 8 -


Fig. 3 eine vereinfachte Ausführungsform eines magnetischen Druckverstärkers für Fahrzeugbremsanlagen,
        bei dem Vorkehrungen getroffen sind, um bei einer
        einsetzenden Instabilität aufgrund einer Änderung
        der Druck-Schluckvolumen-Kennlinie der Radbremse
        die weitere Betätigung der Bremse zu ermöglichen,
        dann ohne Druckverstärkung, schematisiert im
        Querschnitt, und

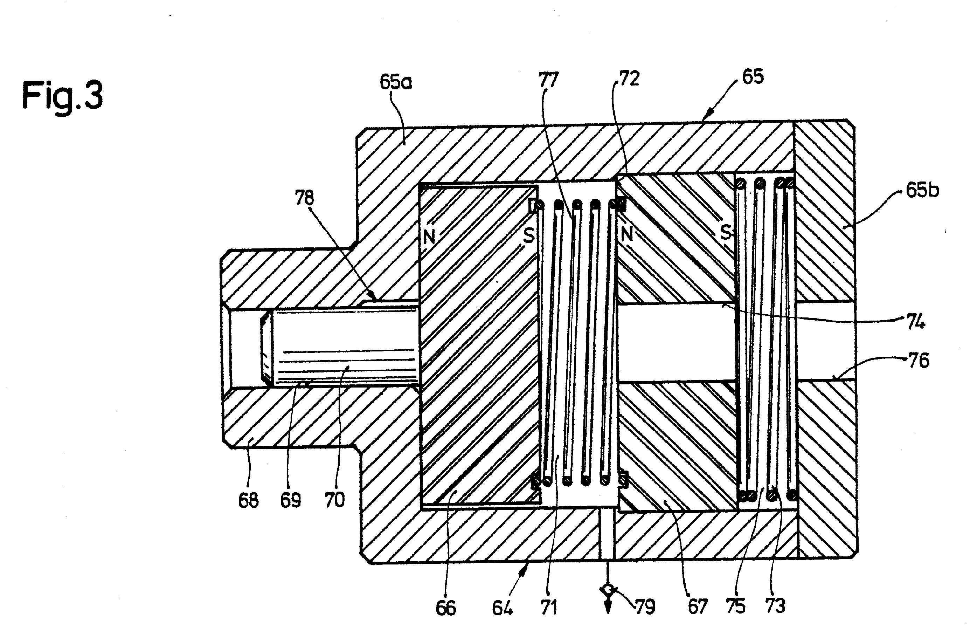

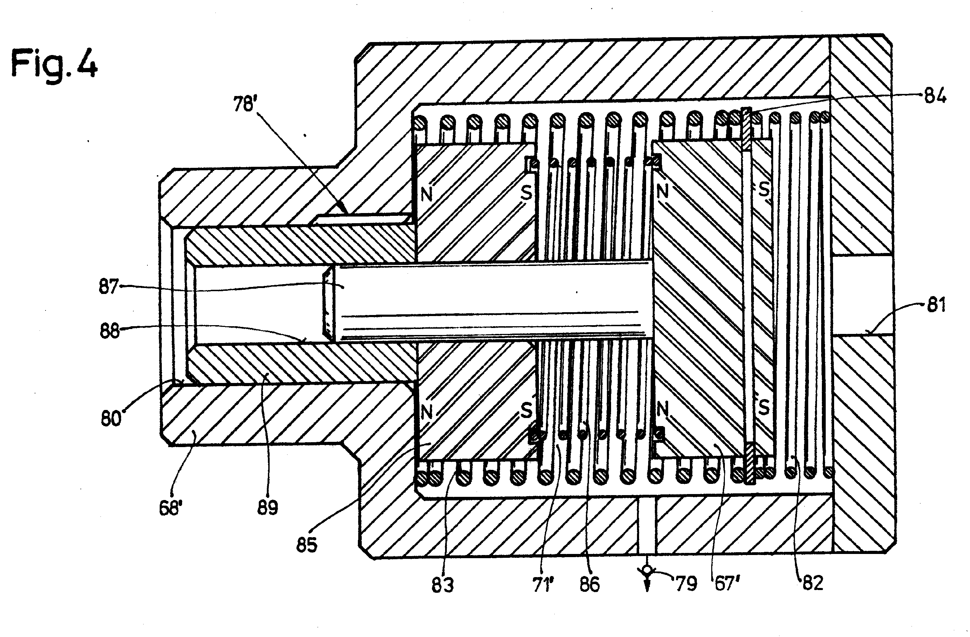

Fig. 4 eine der Fig. 3 ähnliche Ausführungsform mit Mitteln zur Anpassung der Kennlinie der Magnetkräfte
        an die sich möglicherweise ändernde Kennlinie der
        Radbremse, um so eine Instabilität von vornherein
        zu vermeiden.


Beschreibung der Ausführungsbeispiele

Der Grundgedanke vorliegender Erfindung besteht darin,
zur Bremsdruckverstärkung die Umspeicherung von vorhandener Potentialenergie einzusetzen mit der Möglichkeit
der Rückgewinnung und vorzugsweise unter Verwendung magnetischer Systeme sowie vorzugsweise gleichzeitig zur
Bremsdruckmodulation den die Druckverstärkung realisierenden Druckraum über ein Ventil an einen weiteren Entlastungsraum anzuschließen, dessen Volumen von einem
weiteren, beweglichen Magnetteil bestimmt ist.


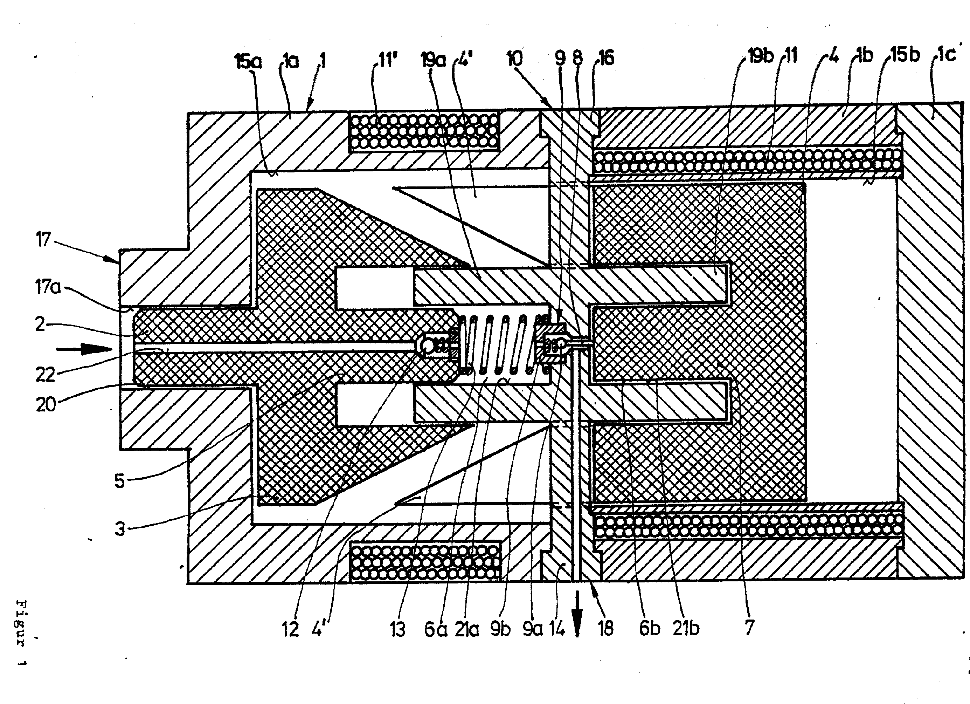

In Fig. 1 ist der erfindungsgemäße Bremsdruckverstärker
und -modulator - im folgenden wird zur Vereinfachung le-

diglich noch von einem Druckmodulator gesprochen - mit 10
bezeichnet; er hat ein Gehäuse 1, welches aus zwei Gehäuseteilhälften 1a und 1b gebildet ist, beide von allgemeiner topfförmiger Form mit inneren Ausnehmungen oder
Kammern 15a, 15b, die bei rotationssymmetrischer allgemeiner Gehäuseform zylindrisch sind. Die beiden auf diese Weise gebildeten Hohlzylinderformen 15a, 15b sind
durch eine in etwa mittlere Trennwand 16 getrennt; das
ganze Gehäuse 1 bildet ein insofern einstückiges Bauteil mit einem Druckeinlaß bei 17 und einem Druckauslaß
bei 18. Der Druckeinlaß 17 ist von einem Stutzen mit
einer Innenbohrung 17a gebildet, der in geeigneter Weise
mit einer vom Hauptbremszylinder kommenden Druckleitung
verbunden sein kann, wenn der Druckmodulator in bevorzugter Anwendung bei Fahrzeugbremsanlagen eingesetzt wird,
während der Auslaß 18 mit einer oder mehreren, zu Radbremszylindern führenden Leitungen zu verbinden ist,
vorzugsweise auf möglichst kurzem Weg, da der Druckmodulator wegen seines kompakten und daher auch kleinen Aufbaus vorzugsweise unmittelbar angrenzend an Radbremszylinder angeordnet werden kann.


Bei dem dargestellten Ausführungsbeispiel der
Fig. 1 sind die eigentlichen, mit der Druckverstärkung und Druckmodulation befaßten Räume gegenüber den Gehäuseausnehmungen 15a, 15b im Umfang erheblich reduziert - es versteht sich, daß die Erfindung auf diese
spezielle Ausführungsform nicht eingeschränkt ist, die lediglich eine
spezielle Abstimmung auf bestimmte Praxisanforderungen darstellt.
Es sind daher bei dem dargestellten Ausführungsbeispiel, vorzugsweise einstückig von der Trennwand 16 ausgehend, nach beiden Seiten
offen durch entsprechende zylindrische Ringwandungen 19a, 19b, innere
zylindrische Druckräume 6a und 6b gebildet, in denen jeweils zylindrisch geformte Innenkolben oder Plunger 5 bzw. 7 gleitverschieblich
und abgedichtet geführt sind. Wie weiter unten noch erläutert wird,
kann der erste Kolben oder Plunger 5 Teil eines größeren gleitverschieblichen Elements, nämlich eines Permanentmagneten 3 sein oder
an diesem befestigt sein, während der Kolben oder Plunger 7 Teil
eines weiteren Permanentmagneten 4 ist oder jedenfalls an diesem
befestigt ist.

Dabei ist dem Plunger 5 gegenüberliegend und mit diesem zur Durchführung einer gemeinsamen Verschiebung verbunden, vorzugsweise
einstückig mit diesem ausgebildet, ein weiterer Kolben oder Plunger
2 in einer verjüngten Zylinderführung 20 des einen Gehäuseteils 1a
angeordnet, so daß dessen Stirnfläche unter dem Druck des vom Hauptbremszylinder kommenden Bremsfluids steht, wobei Teile des Permanentmagneten 3 sich über die jeweiligen inneren Zylinderführungen
21a und 21b, die von den Ringwandungen 19a, 19b gebildet sind, in
dem von den Ausnehmungen 15a, 15b gebildeten freien Raum jeweils
erstrecken und so eine wesentlich größere Ausdehnung bezüglich
Fläche und Volumen aufweisen, mit entsprechend bei Permanentmagneten verbesserten und verstärkten Funktionsabläufen, worauf
weiter unten noch eingegangen wird. Die Polarisierung der Permanentmagnete 3 und 4 kann, wie in der Zeichnung angegeben erfolgen, so
daß sich zwischen den beiden starken Permanentmagneten 3 und 4,
die beide jeweils in den Ausnehmungen 15a, 15b gleitverschieblich
gelagert sind, entsprechende Anziehungskräfte ergeben, worauf weiter unten in Verbindung mit der Funktionsbesprechung noch eingegangen wird. Die mittlere Trennwand 16 ist dabei im Außenringbereich,
also außerhalb der zentralen, Zylinderführungen 21a und 21b bildenden Ringwandteile 19a, 19b vorzugsweise mit Durchbrechungen versehen, die sich auch breitflächig erstrecken, so daß, wie angedeutet,
Teile des Permanentmagneten 4 - diese Teile sind mit 4' bezeichnet
und keilförmig ausgebildet, auch in den in der Zeichenebene linken
Gehäuseausbildung 15a erstrecken, so daß es möglich ist, den Abstand zwischen den beiden Permanentmagneten entsprechend zu reduzieren und den Permanentmagneten 3 nahe genug mit seinem "Südpol"
an den "Nordpol" des Permanentmagneten 4 heranzubringen, zur Erzielung größtmöglicher Anziehungs- und Wirkungskräfte. Mit anderen
Worten, der Permanentmagnet 4 erstreckt sich mit Verlängerungen
oder Beinchen durch die Löcher oder Durchbrechungen der Trennwand 16 in Richtung auf den Permanentmagneten 3, wobei beide bevorzugt komplementäre Außenformen, wie dargestellt, aufweisen
- der Permanentmagnet 3 also in Richtung auf den Permanentmagneten 4 verjüngend oder spitz zulaufend, während der Permanentmagnet 4 sich mit seinen Verlängerungen konusförmig öffnet zur Aufnahme der entsprechend vorspringenden Teile des Permanentmagneten 3.


Es versteht sich ferner, daß die Plunger 5 und 7 sowie 2 auch aus
einem anderen Material als die Permanentmagneten 3 und 4 gemacht werden können und schließlich kann der gesamte Permanentmagnet 3
auch lediglich ein Stück magnetisierbares Material sein, beispielsweise Stahl oder Weicheisen. Eine im Druckraum 6a angeordnete
Vorspannungsfeder 13 dient dazu, die beiden Permanentmagneten 3
und 4 in der Ruhestellung - also bei nicht betätigtem Bremspedal -
auseinanderzuhalten, mit der Maßgabe, daß in diesem Fall der Permanentmagnet 4 sich an seinem in der Zeichenebene linken Anschlag
befindet. Diesen Anschlag hält der Permanentmagnet 4 im übrigen
im Ruhezustand auf jeden Fall aufgrund der gegenseitigen Anziehungskraft ein.

Der Druckraum 6a ist über ein Ventil 9 gleichzeitig mit dem Auslaßanschluß 18 zu den Radbremszylindern und dem weiteren, Bremsfluid aufnehmenden Entlastungsraum 6b verbunden, der in der sich
am Anschlag befindlichen Position des Permanentmagneten 4 lediglich angedeutet ist und gleichzeitig auch als Druckraum wirken kann,
je nach Ablauf eventuell durchzuführender ABS-Funktionen. Das Ventil 9 ist im einzelnen so aufgebaut, daß eine Ventilkugel 9a von einer
eigenen Vorspannungsfeder 9b auf einen den Auslaß des Druckraums
6a zum Ausgangsanschluß 18 und zum Entlastungs-Druckraum 6b versperrenden Sitz gedrückt, dabei ist aber am Plunger 7 eine schmale
Druckstange oder ein Stift 8 angeordnet, der in der Anschlagposition
des Permanentmagneten 4 die Ventilkugel 9a von ihrem Sitz abhebt
und daher den Druckraum 6a mit allen Auslaßanschlüssen verbindet.

Angrenzend zum Permanentmagneten 4 befindet sich noch eine diesen
umgebende Erregerspule 11, die bei entsprechender Zuführung eines
elektrischen Stroms zunächst in einer vorgegebenen Richtung den Permanentmagneten 4 von seinem Anschlag in der Zeichenebene nach rechts bewegen kann, wodurch sich bei gleichzeitiger Schließung des Ventils 9 der Entlastungsdruckraum 6b vergrößert. Der Detailaufbau des in der Zeichnung dargestellten Druckmodulators umfaßt daher ein erstes topfförmiges Teilgehäuse 1a, von der Trennwand 16 abgedeckt, die mit diesem verschraubt sein kann; eine zweite, auf die Trennwand 16 mit entsprechenden Ringpassungen aufgesetzte Ringwandung 1b, die sich durch einen bei 1c angedeuteten und aufgesetzten Deckel zur zweiten Gehäusetopfform 1b vervollständigt. Die Erregerspule 11 kann gegenüber der Ausnehmung und der Kammer 1b durch eine weitere Ringwandung, vorzugsweise aus diamagnetischem Material, abgedeckt sein.

Es ergibt sich dann die folgende Grundfunktion, wobei zunächst auf die Druckverstärkung eingegangen wird. Es sei angenommen, daß am Eingangsanschluß 17 der Bremsdruck vom Bremspedal (Hauptbremszylinder) ansteht. Dieser Druck übt eine in der Zeichenebene nach rechts wirkende Kraft auf den Plunger 2 aus, der entweder mit dem Permanentmagneten 3 fest verbunden oder jedenfalls ein Teil von diesem ist. Der Permanentmagnet 3 wird in jeder Position von dem starken Permanentmagneten 4 in der Zeichenebene ebenfalls nach rechts angezogen, so daß die Kraft, mit welcher der Plunger 5 nach rechts getrieben wird und eine entsprechende Druckkraft auf die im Druckraum 6a befindliche Bremsflüssigkeit oder das Bremsfluid ausübt, die Summe der beiden, soeben erwähnten nach rechts wirkenden Kräfte ist. Auf diese Weise wird der Bremsdruck vom am Eingang anstehenden Druck verstärkt zum im Druckraum 6a befindlichen Druck, wobei dieser Bremsdruck bei von ihrem Sitz abgehobener Ventilkugel 9a durch die Verbindung des Druckraums 6a mit dem jeweils angeschlossenen Radbremszylinder auf diesen wirkt. Um die Ventilkugel 9 durch den Stift 8 von ihrem Sitz abzuheben, muß sich der Plunger 7 als Teil des Permanentmagneten 4 oder an diesem befestigt am in der Zeichnung dargestellten linken Anschlag befinden und dieser linke Anschlag ist durch die gegenseitige Anziehungskraft, also die Magnetkraft, die der Permanentmagnet 4 auf den Permanentmagneten 3 oder das dort befindliche magnetische Teil ausübt, auf jeden Fall sichergestellt. Es versteht sich hierbei, daß, da durch die Dreiwegefunktion im Ventilbereich auch der Plunger 7 bzw. der von ihm verschlossene Entlastungsdruckraum 6b mit dem Radbremsdruck beaufschlagt ist, diese Kraft kleiner sein muß als die Kraft, welche die Permanentmagneten 3 und 4 gegenseitig aufeinander ausüben, damit der Plunger 7 am linken Anschlag und die Kugel 9 vom Stift 8 von ihrem Sitz abgehoben bleibt. Eine entsprechende Wahl der Querschnittsfläche des Plungers 7 ist daher erforderlich.

Diese Grundfunktion der Bremsdruckverstärkung durch Potentialumspeicherung ist ein wesentliches Merkmal vorliegender Erfindung; durch die zunehmende Annäherung der beiden Magnete 3 und 4 ergibt sich die entsprechende Bremsdruckerhöhung, so daß die auf diese Weise freigesetzte Energie aufgenommen (gespeichert) wird vom sich erhöhenden, an den Radbremszylinder anstehenden Druck des Bremsfluids oder der Bremsflüssigkeit. Wird der am Einlaß 17 eingesteuerte Bremsdruck weggenommen, dann werden die Komponenten auf die in der Zeichnung dargestellten Positionen zurückgeführt mit der Folge, daß der hohe Druck am Radbremszylinder wieder rückgewonnen wird durch die eine Potentialumspeicherung bildende Abstandsgewinnung des Permanentmagneten 3 zum auf Anschlag verbleibenden Permanentmagneten 4.

Die Funktion der Druckmodulation, wenn beispielsweise angenommen
werden soll, daß der Druck im Radbremszylinder bei weiter anstehendem Druck am Einlaß 17 abgesenkt werden soll, erfolgt dann dadurch, daß der Erregerspule 11 ein entsprechender Strom zugeführt
wird, wodurch der Permanentmagnet 4 und mit ihm der Plunger 7 in
der Zeichenebene nach rechts je nach Ausmaß der elektrischen Ansteuerung verschoben wird. Hierdurch verliert zunächst der Stift 8
seinen Kontakt mit der Ventilkugel 9a, so daß der Druckraum 6a abgeschlossen wird und nachfolgend zu dieser Unterbrechung der Druckverbindung zwischen dem Druckraum 6a und dem Radbremszylinder
ergibt sich durch weiteres Zurückweichen des Permanentmagneten 4
aufgrund des eingesteuerten Stroms eine Druckabsenkung in dem jeweiligen Radbremszylinder aufgrund der Volumenzunahme im sich
öffnenden Entlastungsdruckraum 6b. Jede weitere Erhöhung des
Stroms in der Erregerspule 11 führt zu einer weiteren Radbremszylinder-Druckabsenkung und umgekehrt; wird der Strom in der Spule
je nach gewünschtem ABS-Funktionsverlauf wieder reduziert, dann
wird, und zwar vorzugsweise im kontinuierlichen Ablauf, der Druck
im Radbremszylinder wieder entsprechend erhöht.

Es versteht sich in diesem Zusammenhang, daß die Querschnittsflächen der Plunger 2, 5 und 7 sowie die Anziehungskraft der Permanentmagnete so aufeinander abzustimmen sind, daß der Plunger 7,
der durch sein Zurückweichen den Entlastungsdruckraum 6b bildet,
vom Bremsdruck allein nicht nach rechts verschoben werden kann.

Vorzugsweise wird der Querschnitt bzw. der Durchmesser des Plungers 5 etwa kleiner als der des Plungers 2 gewählt, so daß bei einer Bremspedalbetätigung der Druck im Druckraum 6a immer größer als der am Einlaßanschluß vom Hauptbremszylinder eingesteuerte Bremsdruck ist, so daß bei Bremspedalbetätigung die Ventilkugel 9a auf ihren Sitz gedrückt wird.

Die hier zentral ausgeführte Bohrung 22 durch den Plunger 2, den Permanentmagneten 3 und den Plunger 5 ermöglicht bei unbetätigter Bremse ein Nachsaugen von Bremsfluid (Bremsflüssigkeit) über das Rückschlagventil 12 in den oder die an den Ausgang angeschlossenen Radbremszylinder. Weiter vorn ist schon hinsichtlich der Form der Permanentmagnete 3 und 4 auf die Erzielung günstiger Magnetkraftverhältnisse hingewiesen worden; es versteht sich, daß die Permanentmagnete 3 und 4 so gewählt sind, daß die Kraft-Wegkennlinie zwischen den Permanentmagneten möglichst günstig ist, wobei eine günstige Kraft-Wegkennlinie so verläuft, daß bei stetiger (linearer) Druckerhöhung am Eingang der Druck im an den Druckmodulator angeschlossenen Radbremszylinder sich ebenfalls stetig (linear) erhöht.

Man erkennt ferner aus dem grundsätzlichen, in der Zeichnung dargestellten Aufbau des erfindungsgemäßen Druckverstärkers und -modulators, daß bei ergänzender Anordnung einer weiteren Erregerspule 11' hier im Bereich und daher einwirkend auf die Position des Permanentmagneten 3 auch ohne Betätigung des Bremspedals eine Radbremsdruck-Modulation vorgenommen werden kann, denn durch einen entsprechenden Erregerstrom in der Spule 11' wird der Permanentmagnet 3 und damit der Plunger 5 in der Zeichenebene nach rechts verlagert, so daß sich eine Druckerhöhung im Raum 6a und damit des am Radbremszylinder anstehenden Bremsfluids ergibt. Eine entsprechend selektive Ansteuerung ermöglicht daher in einfacher Weise die Durchführung von ASR-Funktionen (Antriebsschlupfregelung).

Der Kern der Erfindung beruht auf dem Prinzip der Umspeicherung von Potentialenergie; bewegt sich der Permanentmagnet, entweder unter dem vom Hauptbremszylinder anstehenden Druck am Kolben 2 oder aufgrund einer Erregung der Spule 11' in der Zeichenebene nach rechts, dann leistet die Magnetkraft eine Arbeit, die von der Bremsflüssigkeit als Kompressionsenergie aufgenommen wird. Je mehr sich der Plunger 5 nach rechts bewegt, desto höher steigt der Druck im angeschlossenen Radbremszylinder und im Druckraum 6a an - desto höher ist zwar auch die von der Bremsflüssigkeit auf den Plunger in der Zeichenebene nach links ausgeübte Rückwirkungskraft, die aber von der ebenfalls entsprechend höheren Magnetkraft, die sich auf den Permanentmagneten 3 in Richtung nach rechts auswirkt, aufgehoben wird.

Umgekehrt wird, wenn man zunächst auf die reine Verstärkerarbeit abstellt, bei Beendigung eines Bremsvorgangs von der bisher komprimierten Bremsflüssigkeit Arbeit geleistet, die zu einem Zurückweichen des Permanentmagneten 3 in der Zeichenebene nach links führt (zunehmende Abstandsgewinnung zur Position des Permanentmagneten 4 und entsprechende Wiedergewinnung der Potentialenergie durch Rückspeicherung) wobei von der Bremsflüssigkeit im übrigen gleichermaßen Arbeit geleistet wird, wenn der Permanentmagnet 4 bei der Realisierung von ABS-Funktionen eine Verschiebung in der Zeichenebene nach rechts durchführt; diese Arbeit wird von den Permanentmagneten 3 und 4 durch ihre relative Abstandsvergrößerung aufgenommen. Dabei wird, je weiter der Permanentmagnet 4 sich nach rechts bewegt, der an den Radbremszylinder anstehende Bremsdruck (und somit auch die auf den Plunger 7 wirkende Kraft der Bremsflüssigkeit) umso kleiner und umso kleiner wird auch die wirkende Magnetkraft. Lediglich der Unterschied zwischen der Magnetkraft einerseits und der von der Bremsflüssigkeit auf den Plunger ausgeübten Kraft andererseits muß durch den durch die Spulenwicklungen 11 fließenden Strom zur Druckmodulation aufgebracht werden.

Man erkennt im übrigen, daß bei einer Druckmodulation über den Entlastungsdruckraum 6b eine Rückwirkung auf das Bremspedal nicht spürbar ist, da der zurückweichende Plunger 7 über den Stift 8 das Rückschlagventil 9 verschließt und Druckvariationen daher im primären Druckraum 6a nicht auftreten.

Die bei vorliegender Erfindung stattfindende Umspeicherung von Potentialenergie einerseits als Abstandsbeziehung zwischen dem Magneten und andererseits als Kompressionsdruck im Bereich des Radbremszylinders steht im Gegensatz zur Arbeitsweise herkömmlicher Bremskraftverstärker, bei denen in der Bremsflüssigkeit im Radbremszylinder und in den Zuleitungen gespeicherte Potentialenergie bei der Expansion nicht zurückgewonnen werden kann, so daß für solche Bremskraftverstärker die externe Energiequelle notwendig ist, die als Hilfsenergie arbeitet. Bei dem vorliegenden, erfindungsgemäßen magnetischen Druckverstärker und -modulator wird eine äußere Energiequelle nicht benötigt und bei der Umspeicherung der Potentialenergie müssen lediglich Hystereseverluste ersetzt werden.

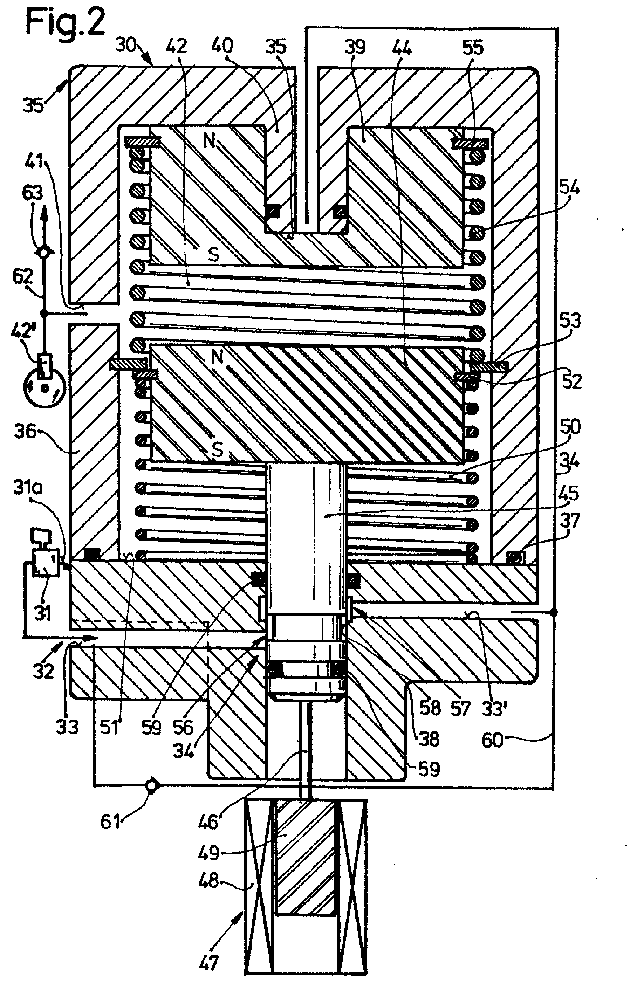

Bei dem in Fig. 2 gezeigten weiteren Ausführungsbeispiel
eines magnetischen Bremsdruckmodulators 30 ohne Pedalrückführung befindet sich der Anschluß zum Hauptbremszylinder 31 bei 32; die gehäuseinterne Druckleitung 33
mündet zunächst in einen Ventilbereich 34 und setzt sich
dann bei 33' und weiterführend über 34 in einen Arbeitsdruckraum 35 fort, wobei die Druckleitung 34 in der Darstellung der Fig. 2 zwar als externe Verbindungsleitung
dargestellt, wie es sich versteht aber auch durch gehäuseinnere Kanäle gebildet sein kann.

Der Grundaufbau des magnetischen Bremsdruckmodulators der
Fig. 2 umfaßt ein äußeres Gehäuse 35, gebildet aus einem
ersten topfförmigen oberen Teil 36 und       einem unteren, über eine zwischengelegte Dichtung 37 aufgesetzten
Deckel 38, der auch den Ventilbereich 34 beinhaltet. Es
versteht sich, daß die Ausbildung des Gehäuses an sich
beliebig realisiert sein kann; innerhalb des Gehäuses
befinden sich wiederum verschieblich gelagert und bei
grundsätzlich vereinfachtem Aufbau gegenüber dem Ausführungsbeispiel der Fig. 1 ein oberer Magnet 39, der in
seiner Grundfunktion den Magneten 3 der Fig. 1 entspricht,
also durch seine Relativverschiebung mit Bezug auf einen
von einer nach innen gerichteten Gehäuseausstülpung gebildeten stationären Stempel oder Plunger 40 in einem
Druckarbeitsraum 42 den zu den Radbremszylindern geführten
Bremsdruck erzeugt. Dieser gelangt über einen Auslaßanschluß 41 zu den entsprechenden Radbremszylindern 42',wie

1891 IP/ot/wi
9.6.86

- 20 -

schematisch angedeutet, wobei sich dann in diesem Fall
der Permanentmagnet 39 mit um den Gehäusezapfen 40 abgedichteter Gleitführung in der Zeichenebene der Fig. 2
nach unten verschiebt, wodurch die Überdeckung zwischen
dem Permanentmagnet 39 und dem Gehäusezapfen 40 geringer
wird und daher eine entsprechende Volumenverringerung
im Druckarbeitsraum 42, dessen Innenvolumen sich ja nicht
ändert, notwendigerweise auftritt, was zu der Bremsdruckerhöhung führt.

Gegenüber den oberen Magneten 39 ist ein zweiter Magnet
44 angeordnet, der mechanisch über eine an ihm festgemachte bzw. einstückig von ihm ausgehende Stange 45 auch
den Ventilbereich 34 durchsetzt und über einen Verbindungsarm 46 nach außen mit einem linearen, vorzugsweise
elektromagnetischen Steller 47 verbunden ist, der je nach
Beaufschlagung der Stellerwicklung 48 mit elektrischer
Energie den Stellerkolben 49 mehr oder weniger stark in
sich einzieht, also in der Zeichenebene der Fig. 2 nach
unten bewegt, wodurch sich auch eine entsprechende Verschiebung des Permanentmagneten 44 und der an ihm befestigten Stange 45 ergibt. In der Darstellung der Fig. 2
wird der Permanentmagnet 44 an seinem oberen Anschlag
durch eine zugeordnete Vorspannungsfeder 50 gehalten,
die sich an dem vom unteren Gehäuseteil 38 gebildeten
inneren Gehäuseboden 51 sowie nach oben am Permanentmagneten 44, beispielsweise an einem eingesetzten oder materialeigenen Ringvorsprung 52 abstützt. Dieser Ringvorsprung dient auf der anderen Seite gleichzeitig zur Anschlagbildung in Verbindung mit einem nach innen vorspringenden, gehäusefixen Ringvorsprung 53, der dann
seinerseits gleichzeitig die Abstützung bildet für die

Vorspannungsfeder 54 des oberen Permanentmagneten 39, so
daß dieser in der in der Zeichnung dargestellten Position
nach oben gedrückt wird, wobei sich dessen Vorspannungsfeder 54 an einem weiteren Ringvorsprung 55 am Permanentmagneten 39 abstützt. Sämtliche Ringvorsprünge 52, 53 und
55 können beispielsweise in umlaufende Ringnuten an den
Permanentmagneten und am Gehäuse eingreifende Federringe
o. dgl. sein.

Die am Permanentmagneten 44 festgemachte Stange 45 durchsetzt den Ventilbereich 34 und wird hierbei auch von den
Querkanälen 33, 33' gekreuzt, die mit ihren Einmündungsbereichen bei 56 und 57 so auf eine Ringausnehmung 58 in
der jeweils oberhalb und unterhalb dieser Stelle über
Dichtungen 59 abgedichtet geführten Stange 45 angeordnet
sind, daß die Stangen mit ihrer Ringausnehmung 58 die
Verbindung zwischen den Kanälen 33 und 33' entweder freigeben oder unterbrechen kann, da die Ringkanten angrenzend zur Ringausnehmung 58,wie für sich gesehen bekannt,
mit den Einmündungen Steuerkanten zur Absteuerung oder
Aufsteuerung des Ventilbereichs 34 bilden.

Es ergibt sich dann folgende Funktion des soeben erläuterten Aufbaus eines magnetischen Bremsdruckmodulators.
Über den Hauptbremszylinderanschluß 32 gelangt, wenn man
zunächst die reine Bremsverstärkerfunktion (keine ABS-
Druckmodulation) in Betracht zieht, der Bremsdruck über
den Querkanal 33 zum Ventilbereich 34, wobei der untere
Magnet 44 wie dargestellt am oberen Anschlag anliegt
und seine den Ventilbereich 34 steuernde Stange 45 sich
in der gezeichneten Position befindet. Daher kann die
Bremsflüssigkeit, von der Stange ungehindert, über den

1891 IP/ot/wi
9.6.86
                          - 22 -

Querkanal 33' und die Verbindungsleitung 34 zum oberen
Magneten 39 fließen. Der vom Hauptbremszylinder 31 erzeugte Druck der Bremsflüssigkeit preßt den oberen Magneten
39 entsprechend nach unten, verdrängt Volumen aus dem Innenraum 42 des Bremsdruckmodulators und über den Außlaßanschluß 41 zu dem oder den jeweiligen Radbremszylindern
42', der dadurch ansteigt. Gleichzeitig ergibt sich durch
die magnetische Anziehungskraft und durch den durch die
Bewegung des oberen Magneten 39 bewirkte Annäherung der
Magnete aneinander eine Erhöhung des Radbremszylinderdrucks, der somit höher als der Hauptbremszylinderdruck
ist, und zwar solange, wie die Kraft der oberen Rückstellfeder kleiner als die Magnetkraft ist. Mit der Wahl der
Federkonstante der oberen Feder 54 läßt sich der Druckverstärkungsfaktor festlegen.

Ergibt sich die Notwendigkeit einer ABS-Druckmodulation,
dann wird der elektromagnetische Linearsteller 47 in entsprechender Weise angesteuert, und zwar jedenfalls mit
einer Kraft, die größer als die Kraft der Vorspannungsfeder 50 ist, die auf den unteren Magneten 44 wirkt,
so daß sich eine Bewegung vom Magnet 44 mit Stange 45
nach unten ergibt. Es versteht sich, daß diese Betätigung bei Einsetzen von ABS-Druckmodulationen durch einen
beliebigen linearen Steller, der an der Stangenverlängerung 46 angreift, realisiert werden kann, auch andere
als der dargestellte elektromagnetische Steller, jedoch
bevorzugt durch solche Systeme, die durch die Ansteuerung
mit einem elektrischen Signal dieses in eine Wegänderung
für die Stange 45 umformen. Hierdurch unterbricht dann,
wie ohne weiteres erkennbar, die Stange 45 mit ihren Absteuerungskanten, zunächst die Verbindung zwischen dem Hauptbremszylinder 31 und der weiterführenden Verbindungsleitung 34 und vergrößert gleichzeitig, und zwar bei weiterer Ansteuerung zunehmend, den Innenraum oder Arbeitsraum 42 des Modulatorgehäuses, da die Stange 45 mit ihrem
Volumen zunehmend aus dem Arbeitsraum 42 austritt. Auf
diese Weise ergibt sich eine entsprechend bemessene
Druckverringerung in dem oder den an den Arbeitsraum 42
angeschlossenen Radbremszylindern 42', und zwar ohne daß
sich, wie ohne weiteres erkennbar ist, hierbei eine Rückwirkung auf das Bremspedal 31a des Hauptbremszylinders
ergibt.

Die rücklaufende Umgehungsleitung 60 mit dem in dieser
noch angeordneten Rückschlagventil 61 zwischen dem Hauptbremszylinderanschluß bei 32 und der Verbindungsleitung
34 dient der Bremsdruckabsenkung während des ABS-Betriebs
dann, wenn die Bremsung abgebrochen wird. Zum Nachsaugen
von Bremsflüssigkeit bei Flüssigkeitsverlust sind der
oder die Radbremszylinder 42' über eine Verbindungsleitung 61 und ein in dieser angeordnetes Rückschlagventil
63 noch mit dem Bremsflüssigkeits-Vorratsbehälter verbunden, der nicht gesondert dargestellt ist.

Ein besonderer Vorteil bei dieser Ausführungsform liegt
noch darin, daß der Druckmodulator insofern " fail safe"
ist; denn falls während des ABS-Betriebs der lineare
Steller 47 ausfallen sollte, bewegt sich der untere
Magnet 44 notwendigerweise unter dem Einfluß der auf
ihn weiter einwirkenden Magnetkraft und der Rückstellkraft seiner Vorspannungsfeder 50 nach oben bis an seinen Anschlag 53, wobei die Stange 45 wieder die Verbindung zwischen dem Hauptbremszylinder und der Verbindungsleitung 34 freigibt. Daher hat, obwohl Bremskraftverstärkung und ABS-Druckmodulation in dem in Fig. 2 dargestellten System integriert sind, der Ausfall des linearen Stellers 47 keinen Einfluß auf die Bremskraftverstärkung. Durch das Zurückfahren des unteren Magneten bei einem solchen Ausfall der Bremsdruckmodulation wieder an seinen Anschlag wird aus dem Bremskreis auch keine Bremsflüssigkeit entnommen, so daß die Bremskreise vollkommen geschlossen bleiben.

Das in wesentlichen Teilen gegenüber dem Ausführungsbeispiel in Fig. 1 vereinfachte (beispielsweise durch Wegfall der Trennwand 16) und in Fig. 3 dargestellte Ausführungsbeispiel richtet sich im wesentlichen auf das mögliche Zusammenwirken der beiden auch hier wieder innerhalb des Gehäuses 65 des Druckmodulators 64 beweglich angeordneten Magneten 66 und 67. Das Gehäuse ist bei diesem Ausführungsbeispiel von einem topfförmig übergreifenden und im wesentlichen den inneren, auch die Magnete 66 und 67 aufnehmenden Arbeitsraum bildenden ersten Gehäuseteil 65a und einen dieses abschließende Deckel 65b gebildet (wobei auch hier selbstverständlich andere Ausbildungen möglich sind) und wobei der erste Gehäuseteil 65a wiederum, wie beim Ausführungsbeispiel der Fig. 1, auf der linken Seite in der Zeichenebene einen stutzenartigen Ansatz 68 zur Verbindung mit der vom Hauptbremszylinder kommenden Leitung aufweist, in dessen Bohrung 69 ein Plunger 70 in Form einer verlängerten, vom Magneten 66 ausgehenden Kolbenstange gleitverschieblich und abgedichtet gelagert ist. Der Magnet 66 ist gegenüber der Innenwandung der Gehäusebohrung nicht abgedichtet, sondern verfügt zu dieser über einen freien Abstand, so daß sich die Reduzierung des Arbeitsraumvolumens auch
hier wieder durch das zunehmende Einfahren des Plungers
70 in den Raum 71 ergibt. Der Magnet 67 wird von einer
eigenen Vorspannungsfeder 73 auf einen bei 72 gezeigten
Anschlag gedrückt, ist gegenüber der ihn umgebenden Wandung der Innenbohrung des Gehäuseteils 65a abgedichtet,
also gleitverschieblich geführt, weist aber eine beispielsweise zentrale Durchlaßöffnung 74 auf, die den
Arbeitsdruckraum 71 mit dem rückwärtigen Druck- bzw. Federraum 75 verbindet, der eine Auslaßöffnung 76 aufweist,
die dann mit einem oder mehreren, in der Zeichnung nicht
dargestellten Radbremszylinder verbunden ist.

Zwischen den beiden Magneten befindet sich eine diese
zueinander auf Abstand haltende weitere Vorspannungsfeder
77 und schließlich ist im Bereich der abgedichteten Führung für den Plunger 70 im Stutzen oder Ansatz 68 noch
eine innere Auskehlung vorgesehen, die als Entlastungsrinne 78 wirkt.

Es ergibt sich dann folgende Funktion, wobei die Grundfunktion die gleiche wie bei den vorherigen Ausführungsbeispielen ist; durch entsprechende Drucksteuerung vom
Hauptbremszylinder her wird der Magnet 66 in der Zeichenebene der Fig. 3 nach rechts bewegt, so daß    , da der
Plunger 70 mit seinem Querschnittsvolumen zunehmend in
den Arbeits- oder Druckraum 71 eintritt, dieser in seinem Volumen reduziert wird und entsprechend Bremsflüssigkeit unter Druckverstärkung, zurückzuführen auf die
vorliegende und sich mit Abstandsverringerung zunehmende
Anziehungskraft zwischen den beiden Magneten 66 und 67,
den Radbremszylindern zugeführt wird.

Durch die freie Beweglichkeit des rechten Magneten 67
von seinem Anschlag 72 und gegen die Kraft seiner Vorspannungsfeder 73 ergibt sich ein Freiheitsgrad, der die
grundlegende Bremsfunktion auch dann noch aufrechterhält,
wenn der in Fig. 3 dargestellte Bremskraftverstärker in
seiner Verstärkungswirkung instabil werden sollte. Ein
Grund hierfür könnte darin bestehen, daß sich die Druck-
Schluckvolumen-Kennlinie der Radbremse so ändert, daß
sich eine wesentlich geringere Drucksteigerung als normal üblich ergibt bei Verdrängung eines entsprechenden
Schluckvolumens, so daß der linke Magnet 66 sich von
selbst so weit nach rechts bewegt, daß die beiden Magnete
aneinander haften. Damit fällt die auf die Potentialumspeicherung zurückzuführende, aus der Magnetwirkung resultierende Verstärkung des Bremskraftverstärkers aus,
dennoch kann die Bremse aber bei einem solchen Bremskraftverstärker weiter betätigt werden, und zwar werden jetzt
beide Magnete zusammen gegen die Kraft der rechten Feder
weiter nach rechts verschoben. Es ist dann nicht mehr
die (abgedichtete) Wirkung des Plungers 70, der in seiner
Gleitführung verschoben wird, sondern der Bremsdruck
wirkt jetzt auf eine wesentlich größere Fläche, gebildet
vom rechten Magneten 67, und der rückwärtige Federraum 75
wird zum Arbeitsraum für die Bremsdruckweiterleitung.
Durch das Aneinanderhaften der beiden Magnete 66 und 67
ist der Plunger 70 so weit aus seiner Bohrung in Richtung
auf den Arbeitsraum 71 zurückgetreten, daß die Entlastungsrinne 78 aufgesteuert wird, so daß bei einem Aneinanderhaften der beiden Magnete 66 und 67 bei Beendigung eines Bremsmanövers der Druck im Radbremszylinder
auch wieder abgebaut werden kann.

Über ein Rückschlagventil 79 ist der mittlere Druckarbeitsraum 71 mit dem nichtdargestellten Bremsmittel-Vorratsbehälter verbunden.

Schließlich ergibt sich bei dem in Fig. 4 dargestellten
Ausführungsbeispiel eines Bremskraftverstärkers, dessen
Außenanschlüsse wie bei dem Ausführungsbeispiel der Fig. 3
ausgebildet sind, also der in der Zeichenebene linke
Einlaßanschluß 80 ist mit dem Hauptbremszylinder und der
Auslaßanschluß 81 mit dem oder den Radbremszylindern verbunden, die Möglichkeit, das Problem der Instabilität
insgesamt zu verringern.

Hierbei erfüllt der gehäuseinnere Druckraum 71' die Gehäusebohrung vollständig, wobei der in der Zeichenebene
rechte Magnet 67' frei, also schwimmend aufgehängt ist
und in dieser Position von beidseitig wirkenden Vorspannungsfedern 88 und 83 gehalten ist, die an den jeweiligen gehäuseinneren Bohrungsgründen angreifen und beidseitig an einem Ringvorsprung 84 des Magneten 67' angreifen.
Der rechte Magnet 67' ist daher sowohl nach links als
auch nach rechts verschiebbar gelagert und stützt sich
ergänzend noch über eine weitere Vorspannungsfeder 68 am
linken Magneten 85 ab.

Seine radiale und axiale Führung bekommt der rechte Magnet 67' durch eine von ihm ausgehende Stange 87, die
eine (zentrale) Bohrung 88 des linken Magneten 85 durchsetzt und als Plunger gleitverschieblich und insofern
auch abgedichtet in einem Ringkolben 89 gleitet, der
seinerseits erst das System der Darstellung der Fig. 3
mit Entlastungsrinne 78' vervollständigt und vom linken Magneten 85 ausgeht bzw. an diesem befestigt ist. Es ist
also der Ringkolben 89, der gleitverschieblich in einer
ersten Innenbohrung des verjüngten Stutzens 68' des Modulatorgehäuses geführt ist und in welchem dann seinerseits wieder der Plunger 87, vom rechten Magneten 67' ausgehend, gleitverschieblich gelagert ist. Man erkennt sofort, daß sich hier in der Lagerung der beiden Magnete
67' und 85 zueinander ein weiterer Freiheitsgrad ergibt,
der darin besteht, daß die beiden Magnete 85 und 67'
eine Relativposition zueinander in freier Wahl und mit
Bezug auf die jeweils einwirkenden Druckkräfte einnehmen
können, so daß beispielsweise auch dann, wenn die zu
einer möglichen Instabilität führende Drucksteigerung
im Bereich des Radbremszylinders geringer als üblich ist
(Änderung der Druck-Schluckvolumen-Kennlinie der Radbremse), der Abstand zwischen den Magneten eingehalten werden kann, diese sich also innerhalb gewisser Grenzen
nicht bis zu einer Haftung aneinander aufeinanderzu bewegen müssen, eben weil der rechte Magnet 67' ausweichen
kann, nämlich nach rechts und hierbei angetrieben wird von
dem auf die Querschnittsfläche seines eigenen Plungers
87 einwirkenden Druck vom Hauptbremszylinder. Mit anderen
Worten, es gelingt, bei dem in Fig. 4 dargestellten Aufbau die Kennlinie der Magnetkräfte an die Kennlinie der
Radbremse anzupassen. Steigt, wenn man den Sachverhalt
von der anderen Seite betrachtet, nämlich der Druck im
Radbremszylinder stark an, dann verschiebt sich notwendigerweise der rechte Magnet 67' gegen die Federkraft
der ihn vorspannenden Federn 83 und 86 mehr nach links,
als wenn dieser Druck nur schwach ansteigt. Der Grund
für diese Eigenbewegung liegt darin, daß der Radbremszylinderdruck auf die Querschnittsfläche des Plungers 87 einwirken kann. Je mehr sich der rechte Magnet nach links
bewegt, um so stärker wird die auf den linken Magneten 85
einwirkende Magnetkraft. Man erkennt, daß sich der Verstärkungsfaktor daher der Kennlinie der Radbremse in gewissen Grenzen anzupassen vermag, wobei die Gefahr der Instabilität nur dann gegeben ist, wenn die Kennlinie der
Radbremse extrem flach verläuft, wenn diese also mit Luft
gefüllt ist, so daß der Druck vom Hauptbremszylinder keinen entsprechenden Gegendruck im Radbremszylinder aufbauen
kann. Es versteht sich, daß die den rechten Magneten 67'
auf Abstand zum linken Magneten 85 haltenden, sich am
Modulatorgehäuse jeweils abstützenden Vorspannungsfedern
82 und 83 hinreichend stark ausgebildet sind, so daß im
Normalbremsfall der rechte Magnet 67' sich relativ zum
Gehäuse gleich viel nach links verschiebt wie der linke
Magnet 85 sich relativ zum Gehäuse nach rechts verschiebt.


Alle in der Beschreibung, den nachfolgenden Ansprüchen
und der Zeichnung dargestellten Merkmale können sowohl
einzeln als auch in beliebiger Kombination miteinander
erfindungswesentlich sein.

R. 20087 IP    Sp
1891 IP/ot/wi
9.6.86

Firma Robert Bosch GmbH, 7000 Stuttgart 1

Patentansprüche

1. Druckverstärker und -modulator, insbesondere Bremsdruckverstärker bei Fahrzeugbremsanlagen mit integriertem Antiblockierschutzsystem zur Realisierung von
Druckmodulationen umfassenden ABS-Funktionen, dadurch
gekennzeichnet, daß ein vom Bremsdruck mindestens mittelbar beaufschlagter Druckraum (6a, 42; 71, 75; 71')
vorgesehen ist, der über einen Auslaß (18; 41, 76, 81)
mindestens mit einem zugeordneten Radbremszylinder verbunden und ferner so ausgebildet ist, daß mit zunehmendem bzw. abnehmendem Bremsdruck vom Hauptbremszylinder gleichzeitig Potentialenergie in der einen oder
anderen Richtung anwachsend umgespeichert wird zur
radbremszylinderseitigen Drucküberhöhung oder Druckabsenkung.

2. Druckverstärker und -modulator nach Anspruch 1, dadurch gekennzeichnet, daß unter Aufrechterhaltung der
Wirkverbindung zur Potentialenergiequelle (Permanentmagnet 3) ein verschiebbares Teil (Permanentmagnet 4),

1891 IP/ot/wi
9.6.86 - 2 -

welches über eine Ventileinrichtung (9, 34) an den
Druckraum (6a, 42) angrenzt bzw. den Druck in diesem
steuert, so angeordnet und betätigbar ist, daß bei
Einsetzen von ABS-Funktionen eine Volumenzunahme im
radbremszylinderseitigen Bereich erfolgt, bei gleichzeitiger Betätigung der Ventileinrichtung    (Fig. 1
und Fig. 2).

3. Druckverstärker und -modulator nach Anspruch 1 oder 2,
   dadurch gekennzeichnet, daß eine Wand des Druckraums
   (6a) von der Position eines mit einem beweglichen Permanentmagneten (3) verbundenen oder als Teil desselben
   ausgebildeten Plungers (5) gebildet ist, wobei der
   bewegliche Permanentmagnet (3) mit einem weiteren Permanentmagneten (4) in ein gegenseitiges Anziehungsverhältnis bildender Wirkverbindung steht.

4. Druckverstärker und -modulator nach Anspruch 1, 2
   oder 3, dadurch gekennzeichnet, daß der bewegliche
   Permanentmagnet in seiner Position unter dem am Einlaßanschluß (17) anstehenden Druck eines Hauptbremszylinders steht, mit der Maßgabe, daß eine hierdurch
   bewirkte anfängliche Verschiebung durch die gegenseitige magnetische Anziehungskraft zur Druckerhöhung des
   Ausgangsbremsfluids verstärkt wird.

5. Druckverstärker und -modulator nach einem der Ansprüche 1 bis 4, dadurch gekennzeichnet, daß der bewegliche Permanentmagnet (3) einen in einer verjüngten
   Zylinderführung (20) des Gehäuses (1) gleitverschieblich gelagerten weiteren Kolben oder Plunger (2) umfaßt, auf den der vom Hauptbremszylinder kommende

0209817

1891 IP/ot/wi
9.6.86                    - 3 -

Druck einwirkt und daß der Auslaß des Druckraums (6a)
über ein Rückschlagventil (9) zum Auslaßanschluß (18)
sowie zu einem Entlastungsdruckraum (6b) geführt ist, dessen Volumen von der Position des anderen, ebenfalls in
Gehäuseführungen verschieblichen Permanentmagneten
(4) bestimmt ist.

6. Druckverstärker und -modulator nach einem der Ansprüche 1 bis 5 zur gleichzeitigen Realisierung von ABS-
   Funktionen - integriertes ABS, dadurch gekennzeichnet,
   daß die gleitverschiebliche Position des anderen Permanentmagneten (4) ausschließlich durch den durch eine
   Erregerspule (11) fließenden Strom zur Realisierung
   von ABS-Funktionen bestimmt ist derart, daß bei Einsetzen von ABS-Funktionen (Druckmodulation) der aus der
   magnetischen Wirkverbindung mit dem ersten Permanentmagneten (3) zurückweichende Permanentmagnet (4) die
   Ventileinrichtung (9) als Verbindungsventil zum primären Druckraum (6a) schließt und gleichzeitig durch
   Volumenvergrößerung in den von ihm bestimmten Entlastungsdruckraum im radbremszylinderseitigen Bereich
   eine Druckentlastung, ein Druckhalten oder gegebenenfalls durch Volumenverringerung eine erneute Druckerhöhöhung, je nach gewünschtem ABS-Funktionsverlauf, bewirkt.

7. Druckverstärker und -modulator nach einem der Ansprüche 1 bis 6, dadurch gekennzeichnet, daß das Gehäuse
   (1) zwei Gleitführungen für die beiden Permanentmagneten (3, 4) bildet, die in durch eine Trennwand (16)
   getrennten Abteilen (15a, 15b) angeordnet sind und
   daß die in etwa mittige Trennwand beidseitig durch gegenüber den Gehäuseausnehmungen (15a, 15b) im Durchmesser kleinere Ringwandungen (19a, 19b) zylindrische
Gleitführungen (21a, 21b) zur Bildung des primären
Druckraums (6a) sowie des Entlastungsdruckraums (6b)
umfaßt, in denen die Plunger (5, 7) gleitverschieblich
gelagert sind, die jeweils Teil des zugeordneten Permanentmagneten (3, 4) oder an diesen befestigt sind.

8. Druckverstärker und -modulator nach einem der Ansprüche 1 bis 7, dadurch gekennzeichnet, daß die radialen
   Abmessungen der Permanentmagnete (3, 4) über die die
   jeweilige Druckverstärkung und Druckmodulation bestimmenden Kolben-Zylindereinheiten (21a, 21b; 5, 7)
   hinausgehen und daß, zusätzlich zu der auf den zweiten
   beweglichen Permanentmagneten ausgerichtete Erregerspule (11) zur Durchführung von ABS-Funktionen, auf
   den ersten beweglichen Permanentmagneten (3) eine weitere elektrische Erregerspule (11') ausgerichtet ist,
   zur willkürlichen Positionsveränderung dieses Permanentmagneten und einer entsprechenden Druckerhöhung
   im zugeordneten primären Druckraum (6a) unabhängig
   von der Bremspedalstellung derart, daß sich ASR-
   Funktionen (Antriebsschlupfregelung) ergeben.

9. Druckverstärker und -modulator nach einem der Ansprüche 1 bis 8, dadurch gekennzeichnet, daß der den primären Druckraum (6a) vom Entlastungsdruckraum (6b)
   trennenden Ventileinrichtung (9) ein vom Plunger (7)
   des zweiten beweglichen Permanentmagneten (4) angetriebener, eine Öffnung des Ventils bewirkender Druckstift (8) zugeordnet ist, der die Ventileinrichtung
   (9) so lange im geöffneten Zustand hält, wie sich der zweite Permanentmagnet (4) an seinem durch die mittlere Trennwand (16) und die gegenseitige Anziehungskraft zum ersten Permanentmagneten (3) bestimmten Anschlag befindet.

10. Druckverstärker und -modulator nach einem der Ansprüche 1 bis 9, dadurch gekennzeichnet, daß der Druckstift (8) am Plunger (7) des zweiten Permanentmagneten (4) eine Ventilkugel (9a) der Ventileinrichtung (9) in der Anschlagposition des Permanentmagneten (4) von ihrem Sitz abhebt.

11. Druckverstärker und -modulator nach einem der Ansprüche 1 bis 10, dadurch gekennzeichnet, daß die Trennwand (16) Durchbrechungen aufweist, durch welche sich vom bei fehlenden ABS-Druckmodulationen an seinem Anschlag verbleibenden zweiten Permanentmagneten (4) Verlängerungen (4') in Richtung auf den ersten Permanentmagneten (3) zur Erhöhung der gegenseitigen Anziehungskraft erstrecken.

12. Druckverstärker und -modulator nach Anspruch 11, dadurch gekennzeichnet, daß die Verlängerungen (4') eine nach außen sich verbreiternde konische Form aufweisen, mit einem sich entsprechend verjüngenden vorderen Teil des ersten Permanentmagneten (3).

13. Druckverstärker und -modulator nach einem der Ansprüche 1 bis 12, dadurch gekennzeichnet, daß eine von einem Rückschlagventil (12) verschlossene Druckleitung (22) vom Einlaß (17a) zum primären Druckraum (6a) geführt ist.

0209817

14. Druckverstärker und -modulator nach Anspruch 1 oder 2,
    dadurch gekennzeichnet, daß ein separater linearer
    Steller (elektromagnetischer Linearsteller 47) vorgesehen ist, der durch Angriff an einer in einer mit
    dem Druckraum (42) verbundenen Gleitführung abgedich-
    tet geführten Stange (45), die an dem bei der Realisierung von ABS-Funktionen als verschiebbaren Teil ausgebildeten Permanentmagneten (44) festgemacht ist, die
    weitere Druckzufuhr vom Hauptbremszylinder durch Randkanten-Absteuerung unterbrochen und die Volumenzunahme im radbremszylinderseitigen Bereich bewirkt wird (Fig.2).

15. Druckverstärker und -modulator nach Anspruch 14, dadurch gekennzeichnet, daß der andere, im Modulatorgehäuse (30) gelagerte Permanentmagnet (39) unter der
    Wirkung der vom Hauptbremszylinder kommenden Bremsdruck verschiebbar ist bei gleichzeitiger Volumenverringerung in mit dem oder den Radbremszylindern
    (42') verbundenem Druckraum (42) und Annäherung an
    den ohne ABS-Funktionen stationär gehaltenem Gegenmagneten (44) innerhalb des Modulatorgehäuses.

16. Druckverstärker und -modulator nach Anspruch 14 oder
    15, dadurch gekennzeichnet, daß das Modulatorgehäuse
    Querkanäle (33, 33') aufweist, die von der Stange (45)
    durchsetzt sind, die in Höhe der Querkanäle eine
    Ringausnehmung (58) aufweist, derart, daß in der
    Ausgangsposition von Stange (45) und zugeordnetem
    Permanentmagneten (44) die Verbindungsleitung vom
    Hauptbremszylinder (31) zur Beaufschlagung des anderen Permanentmagneten (39) geöffnet ist, der längs
    einer abgedichteten, zentralen stationären Führung

(Gehäuseinnenstutzen 40) gleitverschieblich und abgedichtet angeordnet ist.

17. Druckverstärker und -modulator nach einem der Ansprüche 14 bis 16, dadurch gekennzeichnet, daß die mit
ihren Außenabmessungen im Abstand zu der Modulatorgehäusebohrung angeordneten Permanentmagneten (44, 39)
durch Vorspannungsfedern (50, 54) an gehäusestationäre
Anschläge (53, Bohrungsgrund des topfförmigen Gehäuseteils 36) gedrückt sind.

18. Druckverstärker und -modulator nach Anspruch 1, dadurch gekennzeichnet, daß in der Bohrung eines topfförmigen Gehäuseteils (65a) der über einen zugeordneten und an ihm festgemachten Kolben als Plunger (70)
gleitverschieblich unter dem Druck vom Hauptbremszylinder gelagerte Permanentmagnet (66) in vorgegebenem
Abstand und unter Bildung eines Druckraums (71) zum
anderen Permanentmagneten (67) gelagert ist, der seinerseits gleitverschieblich und abgedichtet in der
Gehäusebohrung bis zu einem vorgegebenen Anschlag in
Richtung auf den anderen Magneten (66) beweglich gelagert ist und am Anschlag unter der Wirkung einer Vorspannungsfeder (73) anliegt derart, daß bei durch
eine Änderung der Druck-Schluckvolumen-Kennlinie der
Radbremse hervorgerufenen Instabilität in der magnetischen Bremskraftverstärkerwirkung der unter der
Druckwirkung vom Hauptbremszylinder stehende erste
Permanentmagnet (66) sich gegen den Druck einer zwischen beiden angeordneten Vorspannungsfeder (77) bis
zur Haftung an den anderen Permanentmagneten (67) annähert und anschließend beide Magnete (66, 67) mit lediglicher Druckübertragungsfunktion eine weitere Verschiebung im Modulatorgehäuse erfahren (Fig. 3).

19. Druckverstärker und -modulator nach Anspruch 1 oder
    18, dadurch gekennzeichnet, daß beide Permanentmagnete
    (67', 85) innerhalb der Modulatorgehäusebohrung lediglich durch jeweils zwischen ihnen bzw. gegen das
    Gehäuse wirkende Vorspannungsfedern in ihrer Ausgangsposition gehalten sind.

20. Druckverstärker und -modulator nach Anspruch 19, dadurch gekennzeichnet, daß der radbremszylinderseitige
    Permanentmagnet (67') mit einem an ihm befestigten
    Plunger (87) den dem Hauptbremszylinderanschluß zuge-
    wandten Permanentmagneten (85) durchsetzt, wobei der
    Plunger (87) abgedichtet gleitverschieblich in einem
    Ringkolben (89) geführt und dem Druck vom Hauptbremszylinder ausgesetzt ist (Fig.4).

21. Druckverstärker und -modulator nach Anspruch 19 oder
    20, dadurch gekennzeichnet, daß der Ringkolben (89)
    selbst abgedichtet gleitverschieblich in einer zur
    Gehäusebohrung verjüngten Gleitführung gelagert und
    selbst ebenfalls dem Druck des Hauptbremszylinders
    ausgesetzt ist und auf seiner abgewandten Seite mit
    dem anderen Permanentmagneten (85) verbunden ist derart, daß sich die beiden Kolben (67' und 85) in ihrer
    jeweiligen Relativposition in Abhängigkeit zu dem
    Radbremszylinderdruck so einstellen, daß der sich
    hierdurch ergebende Verstärkungsfaktor eine Anpassung
    an die Druck-Schlupfvolumen-Kennlinie der Radbremse
    erfährt.

0209817

Figur 1

**Fig.2**

Fig.3

Fig.4

0209817

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR-A-2 225 639  (DBA) * Seite 4, Zeile 21  -  Seite  5, Zeile 22 * | 1 | B 60 T    13/12 B 60 T    13/74 B 60 T     8/34 |
| A,D | US-A-3 731 979  (MIKAILA) | | |
| A,D | FR-A-2 391 885  (BOSCH) | | |
| A,D | US-A-3 690 736  (SMIRL) | | |
| A | DE-B-1 043 729  (LEHNARD) | | |

| RECHERCHIERTE SACHGEBIETE (Int Cl 4) |
|---|
| B 60 T    13/00 B 60 T    13/02 B 60 T    13/04 B 60 T    13/10 B 60 T    13/12 B 60 T    13/16 B 60 T    13/74 B 60 T     8/06 B 60 T     8/08 B 60 T     8/34 H 01 F     7/02 |

Der vorliegende Recherchenbericht wurde für alle Patentansprüche erstellt.

| Recherchenort DEN HAAG | Abschlußdatum der Recherche 06-11-1986 | Prüfer HARTEVELD C.D.H. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82